# EUROPEAN PATENT APPLICATION

(11) **EP 4 415 174 A1**
(43) Date of publication of application: **14.08.2024**
(21) Application number: 23155552.5
(22) Date of filing: 08.02.2023
(51) Int. Cl.: H01Q 3/46, H01Q 15/00, H01Q 15/14, H01Q 19/10, H04B 7/145

(54) **A COMMUNICATION SYSTEM FOR WIRELESS TRANSMITTING A DATA SIGNAL FROM A TRANSMISSION DEVICE OF THE COMMUNICATION SYSTEM TO AT LEAST A FIRST RECEIVING DEVICE OF THE COMMUNICATION SYSTEM**

(71) Applicant: Siemens Aktiengesellschaft, 80333 München (DE)
(72) Inventor: Döricht, Volkmar, 80803 München (DE); Michailow, Nicola, 81825 München (DE)
(74) Representative: Siemens Patent Attorneys

(57) **Abstract**

A communication system (10) for wireless transmitting a data signal (34) from a transmission device (12) of the communication system (10) to at least a first receiving device (16) of the communication system (10), wherein the transmission device (12) is configured for generating the data signal (34) and transmitting the data signal (34) in surroundings (36) of the communication system (10), and wherein the receiving device (16, 18, 20, 22) is configured for receiving the transmitted data signal (34),
characterized in that the communication system (10) comprises a pyramid shaped deflection device (24) for deflecting the transmitted data signal (34) from the transmission device (12) to the receiving device (16, 18, 20, 22, wherein at least one surface (26, 28, 30, 32) of the pyramid shaped deflection device (24) is configured as a reconfigurable intelligent surface device (58).

## Description

The present invention relates to a communication system for wireless transmitting a data signal from a transmission device of the communication system to at least a first receiving device of the communication system, wherein the transmission device is configured for generating the data signal and transmitting the data signal in the surroundings of the communication system, and wherein the receiving device is configured for receiving the transmitted data signal.

In the context of radio frequency communications, the so-called reconfigurable intelligent surfaces (RIS) or intelligent reconfigurable surfaces (IRS) are programmable metamaterials which allow to programmatically change phase, amplitude, frequency, and/or a polarization of an incoming signal. This means that they can be used as programmable reflectors or absorbers.

As of today, reconfigurable intelligent surfaces are used to establish a communication link between one transmission device and one receiving device, typically in absence of line-of-sight or a strong indirect propagation paths. As of today, no method is known how reconfigurable intelligent surfaces can be used to create a communication link between one transmission device and multiple receiving devices.

It is an object of the invention to provide a communication system for wireless transmitting a data signal by which an efficient communication between a transmission device of the communication system and at least one receiving device of the communication system can be realized.

This object is solved by a communication system according to the independent claim. Advantageous forms of configurations are presented in the dependent claims.

One aspect of the invention relates to a communication system for wireless transmitting a data signal from a transmission device of the communication system to at least a first receiving device of the communication system, wherein the transmission device is configured for generating the data signal and transmitting the data signal in the surroundings of the communication system, and wherein the receiving device is configured for receiving the transmitted data signal.

According to an embodiment, the communication system comprises a pyramid shaped deflection device for deflecting the transmitted data signal from a transmission device to the receiving device, wherein at least one surface of the pyramid shaped deflection device is configured as a reconfigurable intelligent surface device.

Therefore, the data signal transmitted by the transmission device is split up and reflected by the at least one surface of the pyramid shaped deflection device, in particular in the direction of the receiving device.

In particular, each surface of the pyramid consists of a reconfigurable intelligent surface device and allows to control the deflection angle individually. Through this device, it is possible to create a point-to-multipoint communication link with high-directivity antennas. This communication may be useful for a bidirectional communication, for example a point-to-multipoint or a multipoint-to-point communication.

Therefore, a point-to-multipoint communication or vice versa with high-directivity transmitters may be provided, which may be used, for example, for mmW, THz and laser-based communication. Furthermore, this communication system can be used to overcome the absence of line-of-sight propagation. Furthermore, cost savings to the infrastructure are provided, as a single refractor can be used to create multiple communication links in opposite directions. The reconfigurable intelligent surface device is a passive and potentially cheaper device than employing multiple transmission devices to achieve the same mesh of communication links. One stationary refractor could be used to multiply a mobile transmission device, for example in time-duplex. Furthermore, more devices per area are provided, wherein a highly directive communication reduces the ambient interference for each receiving device.

According to an embodiment, the communication system comprises at least a second receiving device, wherein a first surface of the deflection device is configured for deflecting the data signal to the first receiving device, and a second surface of the deflection device is configured for deflecting the data signal to the second receiving device. Therefore, one transmission device can transmit the data signal to a first receiving device and to a different located second receiving device. In particular, the surfaces of the pyramid shaped deflection device are directed in the direction of the receiving devices. Therefore, by controlling the reconfigurable intelligent surfaces, the beam of the transmission device can be reflected to the receiving devices. It is obvious that also more than two receiving devices can be arranged in the surroundings. For example, the pyramid shaped deflection device may comprise a third reconfigurable intelligent surface device on a third surface, and this surface may be directed to a third receiving device. Also more than three surfaces can be arranged on the pyramid shaped deflection device.

In another embodiment, the deflection device comprises a control device for controlling a deflection of the reconfigurable intelligent surface device. The control device may be, for example, an electronic computing device with electronic means. The control device may be connected to a power supply in order to generate the control signals for controlling the deflection of the reconfigurable intelligent surface device.

For example, a reflection angle of the reconfigurable intelligent surface device may be controlled by the control device.

In another embodiment, a reflection angle of the data signal at the reconfigurable intelligent surface device is adapted by controlling the deflection of the reconfigurable intelligent surface device. Therefore, an efficient way for transmitting the data signal from the transmission device to the receiving device by mirroring the data signal on the reconfigurable intelligent surface device with the adapted reflection angle is provided.

In another embodiment, the pyramid shaped deflection device comprises at least four surfaces for deflecting the data signal. Therefore, for example, the data signal may be transmitted to four different receiving devices.

In another embodiment, the data signal is directed to an apex of the pyramid shaped deflection device. Therefore, this allows to split up and reflect a data signal arriving from the direction of the apex, which is directed to the transmission device, of the pyramid into, for example, n directions.

In another embodiment, an antenna of the transmission device is configured as a horn device or as a beamforming array. Therefore, the data signal can be directed to the pyramid shaped deflection device, in particular in direction of the apex, for deflecting the transmitted data signal.

In another embodiment, the transmission device is configured as a ceiling-mounted device. Therefore, the communication system can be, for example, used in workshops, garages, and warehouses, wherein a lot of receiving devices may be arranged in that areas and just one transmission device may be used at the ceiling of the area.

According to another embodiment, the transmission device is configured as a movable device, in particular the transmission device may be configured as a satellite or a drone. Therefore, also mobile communication may be realized by the communication system.

According to another advantageous form, the pyramid shaped deflection device comprises mechanical means for providing a movement of the pyramid shaped deflection device. For example, if the receiving devices are also movable, the deflection device can be, for example, rotated by the mechanical means in order to transmit the data signal directly to the receiving devices.

In another embodiment, the data signal is generated by the transmission module such that an energy distribution of a beam of the data signal is asymmetric. This means that the transmission device might emit a beam with asymmetric energy distribution to the apex of the pyramid. For example, this is advantageous if the position of the receiving device has changed, and for example the asymmetric beam is configured to transmit more energy to the selected transmission device, because the transmission device is further away.

According to another embodiment, the surface of the pyramid shaped deflection device is configured as a free form surface. Therefore, additionally a reflection angle can be provided by the free form surface in order to arrange a direction change of the data signal or in order to provide a higher energy density to a provided direction.

In another embodiment, the pyramid shaped deflection device is configured as an equilateral and/or an isosceles device. Therefore, depending on the operational area for the communication system, the pyramid shaped deflection device can have different forms, wherein the different forms are configured for deflecting the data signal to the receiving devices.

Independent of the grammatical term usage, individuals with male, female or other gender identities are included within the term.

Further features of the invention result from the claims, the figures and the figure description. The features and combinations of features mentioned above in the description, as well as the features and combinations of features mentioned below in the figure description and/or shown alone in the figures, can be used not only in the combination indicated in each case, but also in other combinations without departing from the scope of the invention.

The invention will now be explained in more detail with reference to preferred examples of embodiments and with reference to the accompanying drawings.

Therefore,
- FIG 1: shows a schematic block diagram according to an embodiment of the communication system; and
- FIG 2: shows schematic top view of an embodiment of a pyramid shaped deflection device.

In the figures, same elements are shown with the same reference signs.

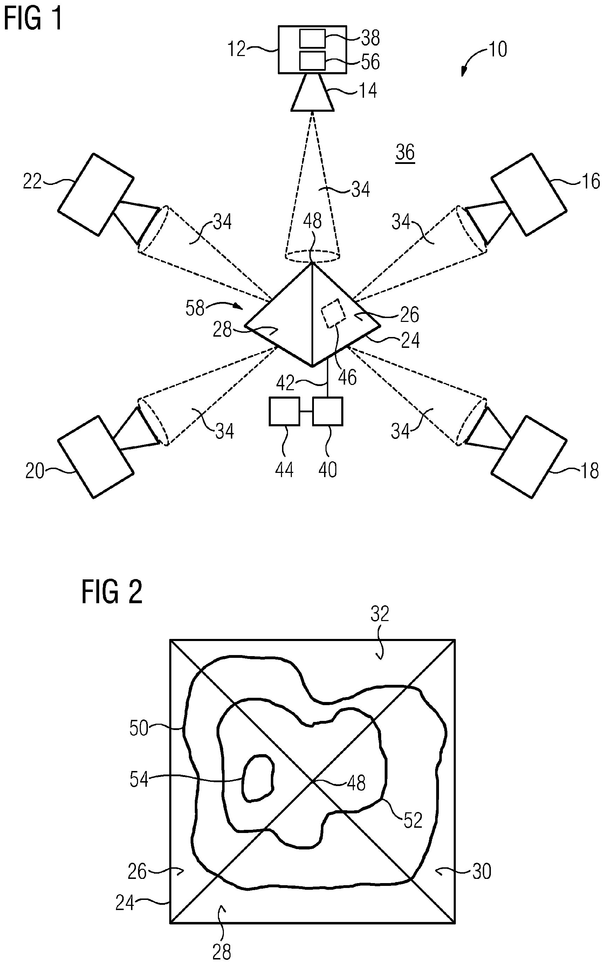

FIG 1 shows a schematic block diagram according to an embodiment of a communication system 10. The communication system 10 comprises at least one transmission device 12 with an antenna 14. Furthermore, the communication system 10 comprises at least one receiving device 16, 18, 20, 22. Furthermore, it is shown that the communication system 10 comprises a pyramid shaped deflection device 24, wherein at least one surface 26, 28, 30, 32 is configured as a reconfigurable intelligent surface device.

Therefore, FIG 1 shows the communication system 10 for transmitting a data signal 34 from the transmission device 12 of the communication system, wherein the transmission device 12 is configured for generating a data signal 34 and transmitting the data signal 34 in the surroundings 36 of the communication system 10, and wherein the receiving device 16, 18, 20, 22 is configured for receiving the transmitted data signal 34.

In an embodiment, the communication system 10 comprises the pyramid shaped deflection device 24 for deflecting the transmitted data signal 34 from the transmission device 12 to the receiving device 16, 18, 20, 22, wherein at least one surface 26, 28, 30, 32 of the pyramid shaped deflection device 24 is configured as a reconfigurable intelligent surface device.

As further shown, the transmission device 12 may comprise a controller 56, for example in order to generate the data signal 34. Therefore, the transmission device 12 may further comprise a power supply 38. As further shown, the antenna 14 may be configured as a horn device or as a beamforming array.

Furthermore, FIG 1 shows that the deflection device 24 may comprise a controller 40 for generating a control signal 42, wherein the control signal 42 is configured for controlling, for example, a reflection angle of at least one surface 26, 28, 30, 32. Therefore, the deflection device 24 may further comprise a power supply 44 for the controller 40.

As shown in FIG 1, a first receiving device 16, a second receiving device 18, a third receiving device 20, and a fourth receiving device 22 are shown. Therefore, the data signal 34 is split into four data signals 34 and directed to each of the receiving devices 16, 18, 20, 22. Furthermore, as shown in FIGs 1 and 2, the pyramid shaped deflection device 24 may comprise four surfaces, in particular a first surface 26, a second surface 28, a third surface 30, and a fourth surface 32. FIG 1 shows that the reflection angle of the data signal 34 at the reconfigurable intelligent surface device 24 may be adapted by controlling the deflection of the reconfigurable intelligent surface device 24.

The transmission device 12 may be configured as a ceiling-mounted device. Furthermore, the transmission device 12 may be configured as a movable device, in particular the transmission device 12 may be configured as a satellite or a drone.

It is also shown that the pyramid shaped deflection device 24 may comprise mechanical means 46 for providing a movement of the pyramid shaped deflection device 24.

In particular, FIG 1 shows that the data signal 34 is emitted by the transmission device 12 and split up at an apex 48 of the deflection device 26. Each surface 26, 28, 30, 32 consists of a reconfigurable intelligent surface device 24 and allows to control the reflection angle individually. Through this device, it is possible to create a point-to-multipoint communication link or vice versa with high-directivity antennas.

The communication system 10 may be used for a bidirectional communication, for example a point-to-multipoint or a multipoint-to-point communication. What is above and what is below does not matter. The important point is that the apex 48 of the deflection device 24 is oriented towards the transmission device 12. The transmission device 12 may be mobile and the deflection device 24 may be stationary. Alternatively, the transmission device 12 may be stationary and the deflection device 24 may be mobile. Furthermore, both may be stationary or both may be mobile. The deflection device 24 may comprise the mechanical means 46 for positioning/tilting. The antennas involved should be highly directive. For example, the antenna 14 may be the horn or beamforming array. In the case of beamforming array, the transmission device 12 may calculate the emitted data signal shape based on a subset of the following information. In particular, the data signal may be shaped depending on the position of the transmission device 12, the position of the deflection device 24, the last known position of one of the receiving devices 16, 18, 20, 22, the shape and current configuration, for example by a digital twin, of the deflection device 24, and/or through physics-based simulations in real time. A mobile receiving device 16, 18, 20, 22 may communicate with the control device 40, either via a central controller or an individual per-phase controller, to adjust the reflection angle such that the reflected data signal 34 tracks its own trajectory.

FIG 2 shows a top view to the deflection device 24. In particular, FIG 2 shows that the data signal 34 is generated by the transmission device 12 such that an energy distribution 50, 52, 54 of a beam of the data signal 34 is asymmetric. FIG 2 shows three different energy distributions 50, 52, 54. For example, a first energy distribution 50 has lower energy than a second energy distribution 52, wherein the second energy distribution 52 has a lower energy density than a third energy distribution 54. In particular, according to a last known position of a receiving device 16, 18, 20, 22, which may receive the data signal 34, the asymmetric beam is configured to transmit more energy to selected receiving devices 16, 18, 20, 22, because they may be, for example, farther away. In particular, this means that the transmission device 12 might emit a beam with asymmetric energy distribution 50, 52, 54, in particular to the apex 48.

Furthermore, the surface 26, 28, 30, 32 may be configured as free form surface. Furthermore, the pyramid shaped deflection device 24 may be configured as an equilateral and/or an isosceles device.

## Claims

1. A communication system (10) for wireless transmitting a data signal (34) from a transmission device (12) of the communication system (10) to at least a first receiving device (16) of the communication system (10), wherein the transmission device (12) is configured for generating the data signal (34) and transmitting the data signal (34) in surroundings (36) of the communication system (10), and wherein the receiving device (16, 18, 20, 22) is configured for receiving the transmitted data signal (34),
**characterized in that**
the communication system (10) comprises a pyramid shaped deflection device (24) for deflecting the transmitted data signal (34) from the transmission device (12) to the receiving device (16, 18, 20, 22, wherein at least one surface (26, 28, 30, 32) of the pyramid shaped deflection device (24) is configured as a reconfigurable intelligent surface device (58).

2. The communication system (10) according to claim 1, wherein the communication system (10) comprises at least a second receiving device (18) and wherein a first surface (26) of the deflection device (24) is configured for deflecting the data signal (34) to the first receiving device (16) and a second surface (28) of the deflection device (24) is configured for deflecting the data signal (34) to the second receiving device (18).

3. The communication system (10) according to claim 1 or 2, wherein the deflection device (24) comprises a control device (40) for controlling a deflection of the reconfigurable intelligent surface device.

4. The communication system (10) according to any of claims 1 to 3, wherein a reflection angle of the data signal (34) at the reconfigurable intelligent surface device (58) is adapted by controlling the deflection of the reconfigurable intelligent surface device (58).

5. The communication system (10) according to any of claims 1 to 4, wherein the pyramid shaped deflection device (24) comprises at least four surfaces (26, 28, 30, 32) for deflecting the data signal (34).

6. The communication system (10) according to any of claims 1 to 5, wherein the data signal (34) is directed to an apex (48) of the pyramid shaped deflection device (24).

7. The communication system (10) according to claim 6, wherein an antenna (14) of the transmission device (12) is configured as a horn device or as a beamforming array.

8. The communication system (10) according to any of claims 1 to 7, wherein the transmission device (12) is configured as a ceiling mounted device.

9. The communication system (10) according to any of claims 1 to 7, wherein the transmission device (12) is configured as a movable device.

10. The communication system (10) according to claim 9, wherein the transmission device (12) is configured as a satellite or a drone.

11. The communication system (10) according to any of claims 1 to 10, wherein the pyramid shaped deflection device (24) is configured as a movable device.

12. The communication system (10) according to any of claims 1 to 11, wherein the pyramid shaped deflection device (24) comprises mechanical means (46) for providing a movement of the pyramid shaped deflection device (24).

13. The communication system (10) according to any of claims 1 to 12, wherein the data signal (34) is generated by the transmission device (12) such, that an energy distribution (50, 52, 54) of a beam of the data signal (34) is asymmetric.

14. The communication system (10) according to any of claims 1 to 13, wherein the surface (26, 28, 30, 32) of the pyramid shaped deflection device (24) is configured as a free form surface.

15. The communication system (10) according to any of claims 1 to 13, wherein the pyramid shaped deflection device (24) is configured as an equilateral and/or an isosceles device.
